# EUROPÄISCHE PATENTSCHRIFT

(11) **EP 0 737 213 B1**
(45) Veröffentlichungstag und Bekanntmachung des Hinweises auf die Patenterteilung: **05.11.1997**
(21) Anmeldenummer: 95904458.7
(22) Anmeldetag: 13.12.1994
(51) Int. Cl.: C08F 10/00, C08F 4/606

(54) **VERFAHREN ZUR HERSTELLUNG VON POLYMERISATEN DES ETHYLENS DURCH SUSPENSIONSPOLYMERISATION**
METHOD OF PRODUCING ETHYLENE POLYMERS BY POLYMERIZATION IN SUSPENSION
PROCEDE DE PRODUCTION DE POLYMERES DE L'ETHYLENE PAR POLYMERISATION EN SUSPENSION

(30) Priorität: 27.12.1993 DE 4344672
(43) Veröffentlichungstag der Anmeldung: 16.10.1996
(73) Patentinhaber: BASF AKTIENGESELLSCHAFT, 67056 Ludwigshafen (DE)
(72) Erfinder: LUX, Martin, D-67125 Dannstadt-Schauernheim (DE); SAIVE, Roland, D-67071 Ludwigshafen (DE); LANGHAUSER, Franz, D-67098 Bad Dürkheim (DE); MICKLITZ, Wolfgang, D-67434 Neustadt (DE); GÖRTZ, Hans-Helmut, D-67251 Freinsheim (DE); LILGE, Dieter, D-67117 Limburgerhof (DE)
(86) Internationale Anmeldenummer: EP9404125
(87) Internationale Veröffentlichungsnummer: WO9518160

(56) Entgegenhaltungen:
- EP-A- 0 447 722
- EP-A- 0 473 924
- US-A- 5 032 562
- PATENT ABSTRACTS OF JAPAN vol. 12, no. 444 (C-545) (3291) 22. November 1988 & JP,A,63 168 409 (SHOWA DENKO) 12. Juli 1988
- PATENT ABSTRACTS OF JAPAN vol. 12, no. 444 (C-545) (3291) 22. November 1988 & JP,A,63 168 409

## Beschreibung

Die vorliegende Erfindung betrifft ein Verfahren zur Herstellung von Homopolymerisaten des Ethylens oder Copolymerisaten des Ethylens mit anderen Olefinen oder deren Mischungen durch Suspensionspolymerisation in Gegenwart von Katalysatorsystemen.

Beispielsweise aus der EP-A 294 942 ist bekannt, daß Metallocenkatalysatoren geträgert werden können, um Polymerisate mit verbesserter Morphologie zu erhalten. Dabei wird jedoch zum einen die Produktivität erniedrigt und zum anderen treten bei der Polymerisation Wandbeläge und Brockenbildung auf.

Ein Herstellverfahren für Polymerisate des Ethylens ist die Suspensionspolymerisation. Diese kann im Phillips-PF (particle forming)-Verfahren in einem kontinuierlich betriebenen Schleifenreaktor durchgeführt werden, wie beispielsweise in der US-A 3 242 150 und US-A 3 248 179 beschrieben. Hierbei entstehen jedoch Produkte mit einer breiten Molekulargewichtsverteilung.

Aufgabe der vorliegenden Erfindung war es daher, ein Verfahren zur Herstellung von Homopolymerisaten des Ethylens oder Copolymerisaten des Ethylens mit anderen Olefinen oder deren Mischungen durch Suspensionspolymerisation zur Verfügung zu stellen, welches die genannten Nachteile nicht aufweist.

Demgemäß wurde ein Verfahren zur Herstellung von Homopolymerisaten des Ethylens oder Copolymerisaten des Ethylens mit anderen Olefinen oder deren Mischungen durch Suspensionspolymerisation in Gegenwart von Katalysatorsystemen gefunden, welches dadurch gekennzeichnet ist, daß als Katalysatorsysteme solche verwendet werden, die als aktive Bestandteile
A) einen feinteiligen mit Trialkylaluminium behandelten Träger,
B) einen Metallocenkomplex,
C) eine offenkettige oder cyclische Alumoxanverbindung
   und
D) ein Alkalimetallalkyl oder Erdalkalimetallalkyl oder deren Mischungen
enthalten.

Außerdem wurden die hierbei erhältlichen Homopolymerisate des Ethylens oder Copolymerisate des Ethylens mit anderen Olefinen oder deren Mischungen gefunden.

Das erfindungsgemäße Verfahren wird zur Herstellung von Homopolymerisaten des Ethylens oder Copolymerisaten des Ethylens oder deren Mischungen verwendet. Bevorzugte Copolymerisate des Ethylens sind solche, bei denen als Comonomere Alk-1-ene eingesetzt werden, vorzugsweise unverzweigte C₃- bis C₆-Alk-1-ene, insbesondere 1-Buten und 1-Hexen. Es können auch mehrere verschiedene Comonomere eingesetzt werden. Die Menge an Comonomeren beträgt hierbei 0,1 bis 80 Gew.-%, bezogen auf die Gesamtmenge an Monomeren, vorzugsweise 5 bis 50 Gew.-%.

Bei dem erfindungsgemäßen Verfahren werden die Homo- bzw. Copolymerisate des Ethylens durch Suspensionspolymerisation in Gegenwart eines Katalysatorsystems hergestellt.

Als Komponente A) enthält dieses Katalysatorsystem einen feinteiligen mit Trialkylaluminium behandelten Träger, der bevorzugt einen Teilchendurchmesser im Bereich von 1 bis 200 µm aufweist, insbesondere von 30 bis 70 µm. Geeignete Trägermaterialien sind beispielsweise Kieselgele, der Formel SiO·aAl₂O₃, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace. Bevorzugt sind Kieselgele, die einen Wassergehalt von 2 bis 12 Gew.-% aufweisen (bestimmt als Gewichtsverlust beim Aufheizen auf 200°C mit 10 K/min).

Andere anorganische Oxide wie Al₂O₃, TiO₂ oder ThO₂ können ebenfalls als Träger eingesetzt werden.

Die Behandlung des Trägers mit Trialkylaluminium wird üblicherweise mit einer Menge von 0,1 bis 3, bevorzugt 0,3 bis 1,2, insbesondere 0,5 bis 0,8 mol/(kg Träger x % Wassergehalt) durchgeführt. Die Verwendung von Trimethylaluminium ist bevorzugt.

Als Komponente B) enthält dieses Katalysatorsystem einen Metallocenkomplex, vorzugsweise von Metallen der IV. und V. Nebengruppe des Periodensystems.

Besonders geeignete Metallocenkomplexe lassen sich durch folgende allgemeine Formel I kennzeichnen: 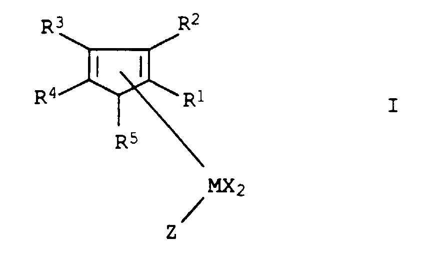 in der die Substituenten folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR⁶,
- wobei R⁶: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹ bis R⁵: Wasserstoff, C₁- bis C₁₀-Alkyl, 5- bis 7-gliedriges Cycloalkyl, das seinerseits ein C₁- bis C₆-Alkyl als Substituent tragen kann, C₆- bis C₁₅-Aryl oder Arylalkyl, wobei gegebenenfalls auch zwei benachbarte Reste gemeinsam für 4 bis 15 C-Atome, bevorzugt 8 bis 15 C-Atome, aufweisende cyclische Gruppen stehen können, oder Si(R⁷)₃ mit
- _{R}7: C₁- bis C₁₀-Alkyl, C₆- bis C₁₅-Aryl oder C₃- bis C₁₀-Cycloalkyl,
- Z: für X oder 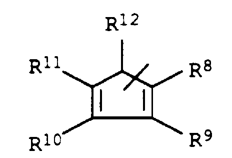 steht,
- wobei die Reste R⁸ bis R¹²: Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome, bevorzugt 8 bis 15 C-Atome, aufweisende cyclische Gruppen stehen können, oder Si(R¹³)₃ mit
- _{R}13: C₁- bis C₁₀-Alkyl, C₆- bis C₁₅-Aryl oder C₃- bis C₁₀-Cycloalkyl,
- oder wobei die Reste R⁴ und Z: gemeinsam eine Gruppierung -[Y(R¹⁴)₂]ₙ-E- bilden, in der
- Y: für Silicium, Germanium, Zinn oder Kohlenstoff steht,
- R¹⁴: für C₁- bis C₁₀-Alkyl, C₃- bis C₁₀-Cycloalkyl oder C₆- bis C₁₀-Aryl
- n: für die Zahlen 1, 2, 3 oder 4
- E für: 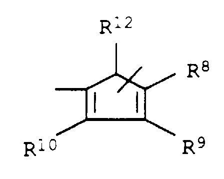 oder A steht, wobei A -O-, -S- , 〉NR¹⁵ oder 〉PR¹⁵ bedeutet,
- mit R¹⁵: C₁- bis C₁₀-Alkyl, C₆- bis C₁₅-Aryl, C₃- bis C₁₀-Cycloalkyl, Alkylaryl oder Si(R¹⁶)₃
- mit R¹⁶: C₁- bis C₁₀-Alkyl, C₆- bis C₁₅-Aryl, C₃- bis C₁₀-Cycloalkyl oder Alkylaryl.

Von den Metallocenkomplexen der allgemeinen Formel I sind 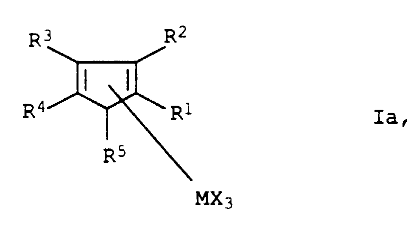 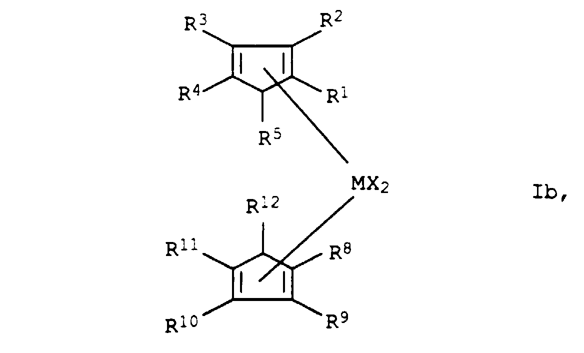 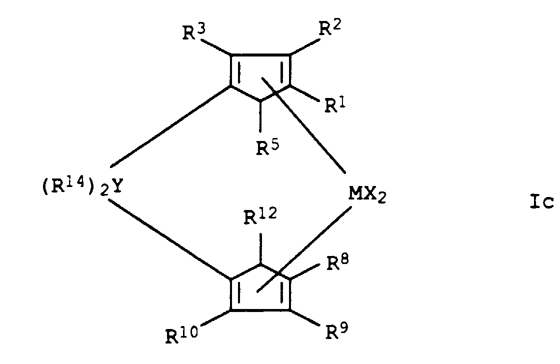 und 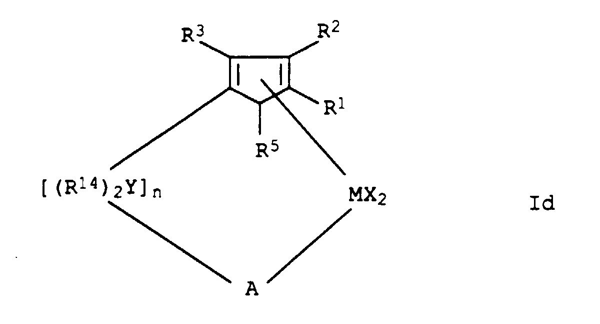 bevorzugt.

Unter der Bezeichnung Metallocene werden also nicht nur die Bis( η-cyclopentadienyl)-Metall-Komplexe verstanden.

Von den Verbindungen der Formel Ia sind insbesondere diejenigen bevorzugt, in denen
- M: Titan, Zirkonium oder Hafnium,
- X: Chlor und
- R¹ bis R⁵: Wasserstoff oder C₁- bis C₄-Alkyl bedeuten.

Von den Verbindungen der Formel Ib sind als bevorzugt diejenigen zu nennen, bei denen
- M: für Titan, Zirkonium oder Hafnium steht,
- x: für Chlor, C₁- bis C₄-Alkyl oder Phenyl,
- R¹ bis R⁵: Wasserstoff, C₁- bis C₄-Alkyl oder Si(R⁷)₃,
- R⁸ bis R¹²: Wasserstoff, C₁- bis C₄-Alkyl oder Si(R¹³)₃ bedeuten.

Insbesondere sind die Verbindungen der Formel Ib geeignet, in denen die Cyclopentadienylreste gleich sind.

Beispiele für besonders geeignete Verbindungen sind u.a.: Bis(cyclopentadienyl)zirkoniumdichlorid,
Bis(pentamethylcyclopentadienyl)-zirkoniumdichlorid,
Bis(cyclopentadienyl)-diphenylzirkonium,
Bis(methylcyclopentadienyl)-zirkoniumdichlorid,
Bis(ethylcyclopentadienyl)-zirkoniumdichlorid,
Bis(n-butylcyclopentadienyl)-zirkoniumdichlorid und
Bis(trimethylsilylcyclopentadienyl)-zirkoniumdichlorid sowie die entsprechenden Dimethylzirkoniumverbindungen.

Von den Verbindungen der Formel Ic sind diejenigen besonders geeignet, in denen
- R¹ und R⁸: gleich sind und für Wasserstoff oder C₁- bis C₁₀-Alkylgruppen stehen,
- R⁵ und R¹²: gleich sind und für Wasserstoff, eine Methyl-, Ethyl-, iso-Propyl- oder tert.-Butylgruppe stehen
- R², R³, R⁹: und R¹⁰ die Bedeutung
R³ und R¹⁰ C₁- bis C₄-Alkyl
R² und R⁹ Wasserstoff haben oder zwei benachbarte Reste R² und R³ sowie R⁹ und R¹⁰ gemeinsam für 4 bis 12 C-Atome aufweisende cyclische Gruppen stehen,
- _{R}14: für C₁- bis C₈-Alkyl,
- M: für Titan, Zirkonium oder Hafnium,
- Y: für Silicium, Germanium, Zinn oder Kohlenstoff und
- X: für Chlor oder C₁- bis C₄-Alkyl stehen.

Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydtoindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-3-tert.butyl-5-ethylcyclopentadienyl)-zirkoniumdichlorid, Dimethylsilandiylbis(-3-tert.butyl-5-methylcyclopentadienyl)-dimethylzirkonium, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.butylindenyl)-zirkoniumdichlorid, Diethylsilandiylbis(-2-methylindenyl)-zirkoniumdibromid, Dimethylsilandiylbis(-2-methyl-5-methylcyclopentadienyl)-zirkoniumdichlorid, Dimethylsilandiylbis(-2-ethyl-5-isopropylcyclopentadienyl)-zirkoniumdichlorid, Dimethylsilandiylbis(-2-methylindenyl)-zirkoniumdichlorid, Dimethylsilandiylbis(-2-methylbenzindenyl)-zirkoniumdichlorid und Dimethylsilandiylbis(-2-methylindenyl)-hafniumdichlorid.

Bei den Verbindungen der allgemeinen Formel Id sind als besonders geeignet diejenigen zu nennen, in denen
- M: für Titan oder Zirkonium,
- X: für Chlor oder C₁- bis C₁₀-Alkyl stehen,
- Y: für Silicium oder Kohlenstoff steht, wenn n = 1 ist oder für Kohlenstoff, wenn n - 2 ist
- R¹⁴: für C₁- bis C₈-Alkyl, C₅- und C₆-Cycloalkyl oder C₆- bis C₁₀-Aryl,
- A: für -O-, -S-, 〉NR¹⁵
und
- _{R}1: bis R³ und R⁵ für Wasserstoff, C₁- bis C₁₀-Alkyl, C₃- bis C₁₀-Cycloalkyl, C₆- bis C₁₅-Aryl oder Si(R⁷)₃ stehen, oder wobei zwei benachbarte Reste für 4 bis 12 C-Atome aufweisende cyclische Gruppen stehen.

Besonders bevorzugt sind Metallocenkomplexe der allgemeinen Formel I, bei denen mindestens einer der Reste R¹ bis R⁵ von Wasserstoff verschieden ist und insbesondere für eine C₁- bis C₁₀-Alkylgruppe steht, vorzugsweise werden Verbindungen der Formel Ib eingesetzt, insbesondere Bis(n-butylcyclopentadienyl)-zirkoniumdichlorid.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als Metallocenkomplex kann auch µ-Oxo-bis-(chlorobiscyclopentadienyl)zirkonium verwendet werden.

Als Komponente C) enthalten die Katalysatorsysteme noch offenkettige oder cyclische Alumoxanverbindungen.

Geeignet sind beispielsweise offenkettige oder cyclische Alumoxanverbindungen der allgemeinen Formel II oder III 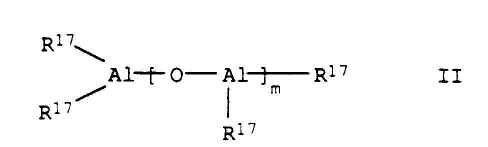 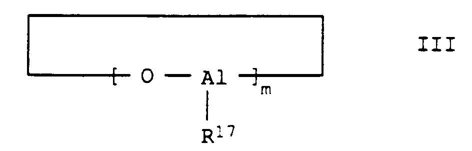
- wobei R¹⁷: eine C₁- bis C₄-Alkylgruppe bedeutet, bevorzugt Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Als Komponente D) enthalten die Katalysatorsysteme ein Alkalimetallalkyl oder ein Erdalkalimetallalkyl oder deren Mischungen. Bevorzugt sind Alkali- oder Erdalkalimetallalkyle der allgemeinen Formeln IV oder V

M¹R¹⁸ IV

M²(R¹⁹)₂ V

wobei
- M¹: für Lithium, Natrium, Kalium, Rubidium oder Cäsium steht,
- M²: für Beryllium, Magnesium, Calcium, Strontium oder Barium
und R¹⁸, R¹⁹ C₁- bis C₈-Alkylqruppen bedeuten.

M¹ steht vorzugsweise für Lithium, M² für Magnesium, R¹⁸ und R¹⁹ bedeuten bevorzugt unverzweigte C₁- bis C₈-Alkylqruppen, insbesondere C₁- bis C₄-Alkylgruppen. Besonders geeignet ist n-Butyl-Lithium.

Zur Herstellung des Katalysatorsystems geht man vorzugsweise so vor, daß auf den mit Trialkylaluminium vorbehandelten Träger der Metallocenkomplex aufgebracht wird. Vorzugsweise tränkt man den vorbehandelten Träger mit einer Lösung aus Metallocenkomplex (Komponente B) und Alumoxanverbindung (Komponente C), wobei als Lösungsmittel vorzugsweise aromatische Kohlenwasserstoffe, insbesondere Toluol verwendet werden. Anschließend wird zur Trockene eingedampft oder filtriert und getrocknet. Das molare Verhältnis von Al aus der Alumoxanverbindung zu dem Metall M aus dem Metallocenkomplex liegt im Bereich von 50 : 1 bis 2000 : 1, vorzugsweise im Bereich von 100 : 1 bis 1000 : 1, insbesondere im Bereich von 200 : 1 bis 600 : 1. Die Menge an Tränklösung wird so gewählt, daß der mit der Lösung von Metallocenkomplex und Alumoxanverbindung getränkte Träger nach Trocknung eine Menge von 5 bis 50 µmol Metallocen pro Gramm enthält.

Die Komponente D) wird üblicherweise als ungeträgerte Katalysatorkomponente der Polymerisation hinzugefügt. Die Menge der Komponente D) liegt im Bereich von 0,2 bis 10 mmol pro Gramm geträgerter Katalysator, bevorzugt im Bereich von 0,5 bis 5 mmol, insbesondere im Bereich von 1 bis 3 mmol.

Die Suspensionspolymerisation ist an sich bekannt. Üblicherweise geht man so vor, daß man in einem Suspensionsmittel, vorzugsweise in einem Alkan polymerisiert. Die Polymerisationstemperaturen liegen im Bereich von -20 bis 115°C, der Druck im Bereich von 1 bis 100 bar. Der Feststoffgehalt der Suspension liegt i.a. im Bereich von 10 bis 80 %. Es kann sowohl diskontinuierlich, z.B. in Rührautoklaven, als auch kontinuierlich, z.B. in Rohrreaktoren, bevorzugt in Schleifenreaktoren, gearbeitet werden. Insbesondere kann nach dem Phillips-PF-Verfahren, wie in der US-A 3 242 150 und US-A 3 248 179 beschrieben, gearbeitet werden.

Bei dem erfindungsgemäßen Verfahren gibt es keinerlei Probleme mit Wandbelägen und Brockenbildung. Zudem entstehen Polymerisate des Ethylens mit einer engen Molekulargewichtsverteilung und im Falle der Copolymerisate des Ethylens mit enger, homogener Comonomerverteilung und niedriger Dichte.

### Beispiele

### Beispiel 1

### Herstellung eines geträgerten Katalysators

In einem trockenen und mit Stickstoff gespülten Reaktor wurden 4,0 kg SiO₂ (Fa. Grace, SG332, mittlerer Teilchendurchmesser 50 µ, 5 Gew.-% H₂O) in 30 l Heptan suspendiert und auf 18°C thermostatisiert. Innerhalb von 60 min wurden 11,2 l einer 1 molaren Lösung von Trimethylaluminium (TMA) in Heptan zugetropft, wobei die Temperatur unter 30°C gehalten wurde. Nach Beendigung der TMA-Zugabe wurde weitere 7 h gerührt. Die Suspension wurde abfiltriert und zweimal mit je 10 l Heptan gewaschen. Nach Trocknen im Vakuum bei 50°C verblieb der modifizierte Träger als ein rieselfähiges Pulver mit einem Aluminiumgehalt von 6,6 Gew.-%.

Zu einer Lösung von 6,80 g (16,81 mmol) Bis(n-butylcyclopentadienyl)-zirkoniumdichlorid in 4,92 l 1,53 molarer Methylalumoxan-Lösung in Toluol wurde bei Raumtemperatur nach 20 minütigem Rühren 0,94 kg des modifizierten Trägers gegeben und weitere 60 min gerührt. Danach wurde bei 50°C im Vakuum das Lösungsmittel entfernt. Es entstand ein gelbes, rieselfähiges Pulver (1,34 kg) mit einem Aluminiumgehalt von 15,9 Gew.-% und einem Zirkongehalt von 0,10 Gew.-%. Demnach betrug das molare Verhältnis Al:Zr insgesamt 540 : 1.

### Beispiel 2 bis 6

### Herstellung von Homopolyethylen durch diskontinuierliche Suspensionspolymerisation

### Beispiel 2

In einen gerührten 10-l-Stahlautoklaven wurden nach sorgfältigem Spülen mit Stickstoff und Temperieren auf die Polymerisationstemperatur von 70°C 4,5 l iso-Butan und 60 mg n-Butyl-Lithium vorgelegt. Dann wurden 489 mg geträgerter Katalysator (aus Beispiel 1) mit weiteren 0,5 l iso-Butan eingespült und Ethylen auf einen Gesamtdruck von 38 bar aufgepreßt. Der Druck im Autoklaven wurde durch Nachdosierung von Ethylen konstant gehalten. Nach 90 min wurde die Polymerisation durch Entspannen des Autoklaven abgebrochen. Es fielen 1820 g Polymerisat in Form eines gut rieselfähigen Grießes an. Im Autoklaven wurden keine Wandbeläge oder Brockenbildung beobachtet.

Die analytischen Daten sind in Tabelle 1 aufgeführt.

### Beispiel 3

Es wurde wie in Beispiel 2 gearbeitet mit dem Unterschied, daß 521 mg geträgerter Katalysator verwendet wurden und die Polymerisationstemperatur 60°C betrug. Die Ausbeute betrug 2400 g. Weitere Daten siehe Tabelle 1.

### Beispiel 4

Es wurde wie in Beispiel 2 gearbeitet mit dem Unterschied, daß 503 mg geträgerter Katalysator verwendet wurden und die Polymerisationstemperatur 80°C betrug. Die Ausbeute betrug 1600 g. Weitere Daten siehe Tabelle 1.

### Beispiel 5

Es wurde wie in Beispiel 2 gearbeitet mit dem Unterschied, daß 518 mg geträgerter Katalysator verwendet wurden und die Polymerisationstemperatur 90°C betrug. Die Ausbeute betrug 1590 g. Weitere Daten siehe Tabelle 1.

### Beispiel 6

Es wurde wie in Beispiel 2 gearbeitet mit dem Unterschied, daß 519 mg geträgerter Katalysator verwendet wurden und die Polymerisationstemperatur 100°C betrug. Die Ausbeute betrug 630 g. Weitere Daten siehe Tabelle 1.

In keinem der Beispiele 3 bis 6 traten Wandbeläge oder Brocken auf.

### Vergleichsbeispiel V1

Es wurde wie in Beispiel 2 gearbeitet mit dem Unterschied, daß 511 mg geträgerter Katalysator verwendet wurden und keine Zugabe von n-Butyl-Lithium erfolgte. Nach 25 min mußte die Polymerisation wegen starken Klopfens des Rührers abgebrochen werden. Im Autoklaven befanden sich 580 g Produkt in Form eines massiven Wandbelages und einiger Brocken.

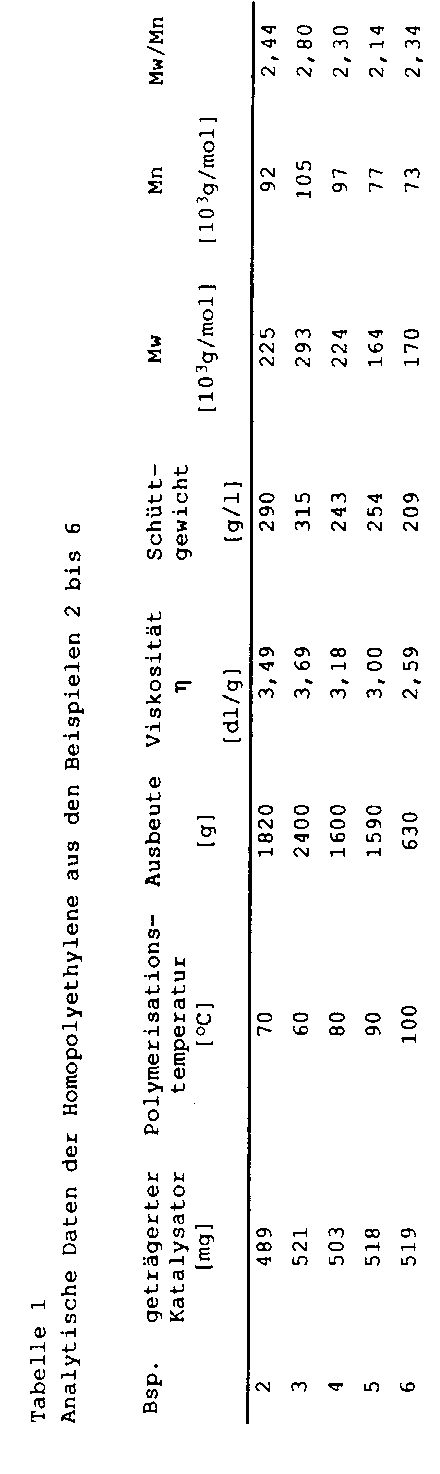

### Beispiel 7 bis 11

Herstellung von Ethylen-1-Buten-Copolymerisaten durch diskontinuierliche Suspensionspolymerisation

### Beispiel 7

Es wurde wie in Beispiel 2 gearbeitet mit dem Unterschied, daß 498 mg geträgerter Katalysator verwendet wurden und zusätzlich zum iso-Butan 50 ml 1-Buten vorgelegt wurden. Die Ausbeute betrug 1250 g. Weitere Daten siehe Tabelle 2.

### Beispiel 8

Es wurde wie in Beispiel 2 gearbeitet mit dem Unterschied, daß 508 mg geträgerter Katalysator verwendet wurden und zusätzlich zum iso-Butan 100 ml 1-Buten vorgelegt wurden. Die Ausbeute betrug 1350 g. Weitere Daten siehe Tabelle 2.

### Beispiel 9

Es wurde wie in Beispiel 2 gearbeitet mit dem Unterschied, daß 513 mg geträgerter Katalysator verwendet wurden und zusätzlich zum iso-Butan 200 ml 1-Buten vorgelegt wurden. Die Ausbeute betrug 1520 g. Weitere Daten siehe Tabelle 2.

### Beispiel 10

Es wurde wie in Beispiel 2 gearbeitet mit dem Unterschied, daß 529 mg geträgerter Katalysator verwendet wurden und zusätzlich zum iso-Butan 400 ml 1-Buten vorgelegt wurden. Die Ausbeute betrug 1250 g. Weitere Daten siehe Tabelle 2.

### Beispiel 11

Es wurde wie in Beispiel 2 gearbeitet mit dem Unterschied, daß 527 mg geträgerter Katalysator verwendet wurden und zusätzlich zum iso-Butan 400 ml 1-Buten vorgelegt wurden und die Polymerisationstemperatur 80°C betrug. Die Ausbeute betrug 1380 g. Weitere Daten siehe Tabelle 2.

In keinem der Beispiele 7-11 traten Wandbeläge oder Brocken auf.

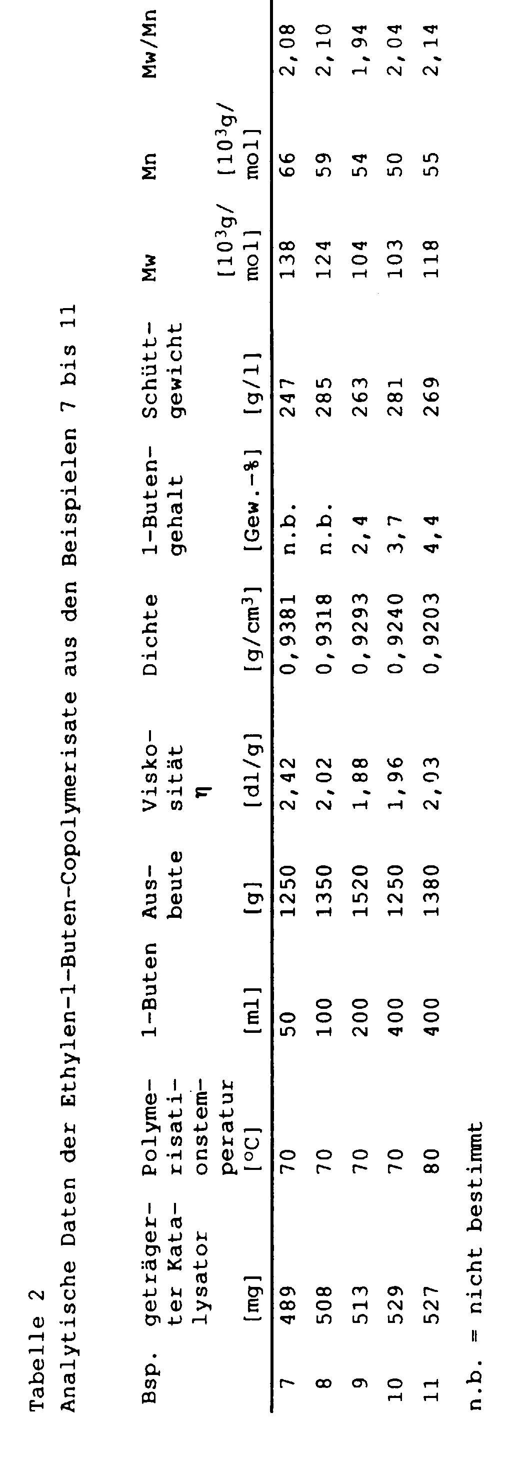

### Beispiel 12

### Herstellung eines Homopolyethylens durch kontinuierliche Suspensionspolymerisation

Die Polymerisation erfolgte in einem kontinuierlich betriebenen Schleifenreaktor, d.h. einem mit Kreisbögen geschlossenen Rohrreaktor, in dem eine iso-Butan-Suspension des entstehenden Polymeren mit Hilfe einer im Rohr befindlichen Pumpe umgewälzt wird. Das Prinzip dieses Reaktortyps ist z.B. in der US-A 3 242 150 und der US-A 3 248 179 beschrieben. Der Reaktor hatte ein Volumen von 0,18 m³.

Zur Durchführung der Polymerisation wurden kontinuierlich 15 kg/h Ethylen, 35 kg/h iso-Butan, 5,8 g/h geträgerter Katalysator (aus Beispiel 1) und 0,4 g/h n-Butyl-Lithium in den Reaktor dosiert. Dabei stellte sich bei einem Druck von 40 bar und einer Polymerisationstemperatur von 70°C ein Ethylengehalt der Flüssigphase von 24 Vol.-% und ein Feststoffgehalt der Suspension von 240 kg/m³ ein. Der Ausstoß an Polymer betrug 14,5 kg/h. Die analytischen Daten des erhaltenen Produkts finden sich in Tabelle 3.

### Beispiel 13

### Herstellung eines Ethylen-1-Buten-Copolymerisats durch kontinuierliche Suspensionspolymerisation

Es wurde wie in Beispiel 12 gearbeitet mit dem Unterschied, daß 16 kg/h Ethylen, 1,6 kg/h 1-Buten, 34 kg/h iso-Butan, 4,9 g/h geträgerter Katalysator und 0,4 g/h n-Butyl-Lithium dosiert wurden. Dabei stellte sich ein Ethylengehalt der Flüssigphase von 26 Vol.-% und ein 1-Butengehalt der Flüssigphase von 10 Vol.-% ein. Der Feststoffgehalt der Suspension betrug 230 kg/m³. Der Ausstoß an Polymer betrug 15 kg/h. Die analytischen Daten des erhaltenen Produkts finden sich in Tabelle 3.

Die Gleichmäßigkeit des Comonomereinbaus wurde durch ATREF (analytical temperature rising elution fractionation) nachgewiesen. Die Abb. zeigt die Abhängigkeit des eluierten Materials von der Elutionstemperatur. Die Elutionskurve ist unimodal und vergleichsweise eng. Insbesondere sind keine Bestandteile an HDPE (Elution bei ca. 100°C) zu finden. Eine Beschreibung der Methode findet sich bei L. Wild, Adv. Polym. Sci. 98, 1-47 (1990) auf den Seiten 13ff. Als Elutionsmittel wurde 1,2,4-Trichlorbenzol verwendet.

**Tabelle 3**

| | | |
|---|---|---|
| Analytische Daten der Polymere aus der kontinuierlichen Polymerisation | | |

| | Beispiel 12 | Beispiel 13 |
|---|---|---|
| Produktivität [g Polymer/g Gesamtkatalysatorsystem] | 2400 | 2800 |
| MFI [g/10 min] | 0,2 | 1,0 |
| HLMI [g/10 min] | 3,6 | 16 |
| Dichte [g/cm³] | 0,945 | 0,911 |
| 1-Butengehalt [Gew.-%] | - | 7,9 |
| Schüttgewicht [g/l] | 260 | 240 |
| Viskosität η [dl/g] | 3,28 | 1,95 |
| Mw [10³g/mol] | 219 | 121 |
| Mn [10³g/mol] | 79 | 63 |
| Mw/Mn | 2,77 | 1,92 |
| Kaltheptanextrakt [Gew.-%] | 0,1 | 0,1 |
| Dart Drop Index [g] (40 µm-Folie) | - | 1100 |
| Dart Drop Index [g] (25 µm-Folie) | - | 790 |

Folgende Methoden wurden zur Charakterisierung der Produkte angewandt:
MFI und HLMI: DIN 53 735, Auflagegewicht 2,16 bzw. 21,6 kg η)-Wert: DIN 53 733
Schüttgewicht: DIN 53 468
Dichte: DIN 53 479
Gewichtsmittelwert Mw und Zahlenmittelwert Mn: Gelpermeationschromatographie
1-Buten-Gehalt: Bestimmung durch ¹³C-NMR- und IR-Spektroskopie Kaltheptanextrakt: 100 g Polymerisat werden in 1 l Heptan 2 h bei 25°C gerührt und dann abfiltriert. Das Filtrat wird zur Trockene gebracht und ausgewogen.
Dart Drop Index: Gemessen an Blasfolien nach ASTM D1709

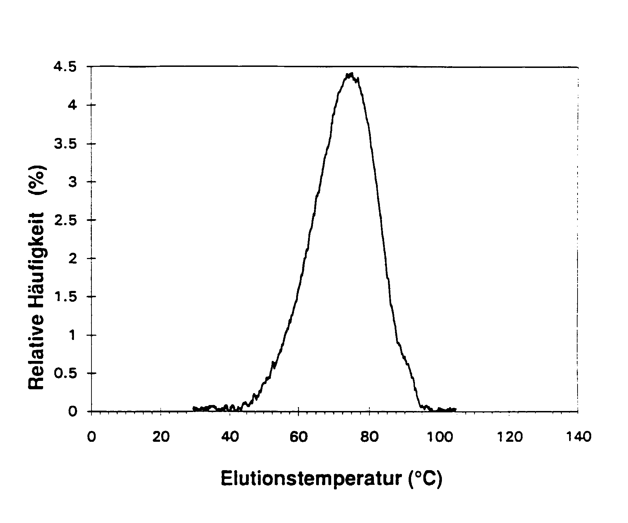

## Patentansprüche

1. Verfahren zur Herstellung von Homopolymerisaten des Ethylens oder Copolymerisaten des Ethylens mit anderen Olefinen oder deren Mischungen durch Suspensionspolymerisation in Gegenwart von Katalysatorsystemen, dadurch gekennzeichnet, daß als Katalysatorsysteme solche verwendet werden, die als aktive Bestandteile
A) einen feinteiligen mit Trialkylaluminium behandelten Träger,
B) einen Metallocenkomplex,
C) eine offenkettige oder cyclische Alumoxanverbindung und
D) ein Alkalimetallalkyl oder Erdalkalimetallalkyl oder deren Mischungen
enthalten.

2. Verfahren nach Anspruch 1, dadurch gekennzeichnet, daß als Komponente A) Träger mit einem Teilchendurchmesser im Bereich von 1 bis 200 µm eingesetzt werden.

3. Verfahren nach den Ansprüchen 1 bis 2, dadurch gekennzeichnet, daß als Komponente A) mit Trimethylaluminium behandelten Kieselgele eingesetzt werden.

4. Verfahren nach den Ansprüchen 1 bis 3, dadurch gekennzeichnet, daß als Komponente B) Metallocenkomplexe der allgemeinen Formel I 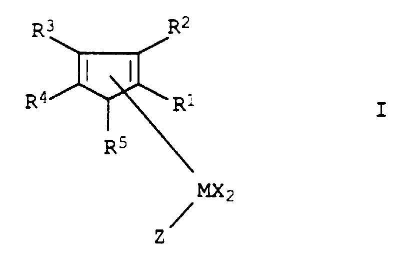 Zeichn. in der die Substituenten folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR⁶,
wobei R⁶ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R⁵ Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R⁷)₃ mit
R⁷ C₁- bis C₁₀-Alkyl, C₆- bis C₁₅-Aryl oder C₃- bis C₁₀-Cycloalkyl,
Z für X oder 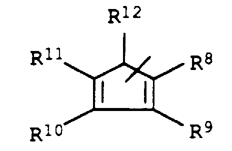 steht,
wobei die Reste R⁸ bis R¹² Wasserstoff, C₁- bis C₁₀-Alkyl, 5- bis 7-gliedriges Cycloalkyl, das seinerseits ein C₁- bis C₁₀-Alkyl als Substituent tragen kann, C₆- bis C₁₅-Aryl oder Arylalkyl bedeuten und wobei gegebenenfalls auch zwei benachbarte Reste gemeinsam für 4 bis 15 C-Atome aufweisende cyclische Gruppen stehen können, oder Si(R¹³)₃ mit
_{R}13 C₁- bis C₁₀-Alkyl, C₆- bis C₁₅-Aryl oder C₃- bis C₁₀-Cycloalkyl,
oder wobei die Reste R⁴ und Z gemeinsam eine Gruppierung -[Y(R¹⁴)₂]ₙ-E- bilden, in der
Y für Silicium, Germanium, Zinn oder Kohlenstoff steht,
_{R}14 für C₁- bis C₁₀-Alkyl, C₃- bis C₁₀-Cycloalkyl oder C₆- bis C₁₅-Aryl
n für die Zahlen 1, 2, 3 oder 4
E für 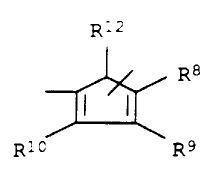 oder A steht, wobei A -O-, -S-, 〉NR¹⁵ oder 〉PR¹⁵ bedeutet,
mit R¹⁵ C₁- bis C₁₀-Alkyl, C₆- bis C₁₅-Aryl, C₃- bis C₁₀-Cycloalkyl, Alkylaryl oder Si(R¹⁶)₃
mit R¹⁶ C₁- bis C₁₀-Alkyl, C₆- bis C₁₅-Aryl, C₃- bis C₁₀-Cycloalkyl oder Alkylaryl
eingesetzt werden.

5. Verfahren nach den Ansprüchen 1 bis 4, dadurch gekennzeichnet, daß als Komponente C) offenkettige oder cyclische Alumoxanverbindungen der allgemeinen Formel II oder III 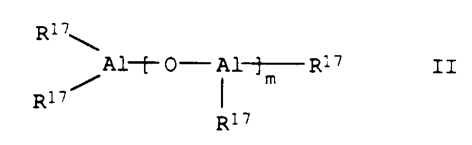 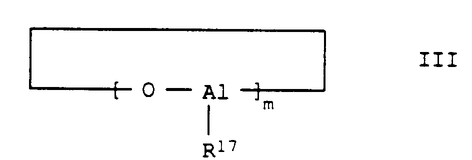
wobei R¹⁷ eine C₁- bis C₄-Alkylgruppe bedeutet und m für eine ganze Zahl von 5 bis 30 steht,
eingesetzt werden.

6. Verfahren nach den Ansprüchen 1 bis 5, dadurch gekennzeichnet, daß als Komponente D) Alkalimetallalkyle oder Erdalkalimetallalkyle der allgemeinen Formeln IV oder V
M¹R¹⁸ IV
M²(R¹⁹)₂ V
wobei
_{M}1 für Lithium, Natrium, Kalium, Rubidium oder Cäsium steht,
_{M}2 für Beryllium, Magnesium, Calcium, Strontium, Barium oder Radium
und R¹⁸, R¹⁹ C₁- bis C₈-Alkylqruppen bedeuten oder deren Mischungen eingesetzt werden.

7. Homopolymerisate des Ethylens oder Copolymerisate des Ethylens mit anderen Olefinen oder deren Mischungen, erhältlich nach dem Verfahren gemäß den Ansprüchen 1 bis 6.

## Claims

1. A process for the preparation of homopolymers of ethylene or copolymers of ethylene with other olefins or mixtures thereof by suspension polymerization in the presence of catalyst systems, wherein the catalyst systems used are those which contain, as active components,
A) a finely divided carrier treated with trialkylaluminum,
B) a metallocene complex,
C) an open-chain or cyclic alumoxane compound
and
D) an alkali metal alkyl or alkaline earth metal alkyl or mixtures thereof.

2. A process as claimed in claim 1, wherein a carrier having a particle diameter of from 1 to 200 µm is used as component A).

3. A process as claimed in either of claims 1 and 2, wherein a silica gel treated with trimethylaluminum is used as component A).

4. A process as claimed in any of claims 1 to 3, wherein a metallocene complex of the formula I 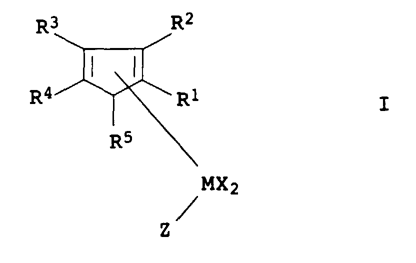 where
M is titanium, zirconium, hafnium, vanadium, niobium or tantalum,
X is fluorine, chlorine, bromine, iodine, hydrogen, C₁-C₁₀-alkyl, C₆-C₁₅-aryl or -OR⁶,
R⁶ is C₁-C₁₀-alkyl, C₆-C₁₅-aryl, alkylaryl, arylalkyl, fluoroalkyl or fluoroaryl, each of 1 to 10 carbon atoms in the alkyl radical and 6 to 20 carbon atoms in the aryl radical,
R¹ to R⁵ are each hydrogen, C₁-C₁₀-alkyl, 5-membered to 7-membered cycloalkyl which in turn may carry a C₁-C₁₀-alkyl as a substituent, C₆-C₁₅-aryl or arylalkyl, where two neighboring radicals together may furthermore form a cyclic group of 4 to 15 carbon atoms, or Si(R⁷)₃;
R⁷ is C₁-C₁₀-alkyl, C₆-C₁₅-aryl or C₃-C₁₀-cycloalkyl,
Z is X or 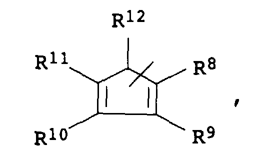
R⁸ to R¹² are each hydrogen, C₁-C₁₀-alkyl, 5-membered to 7-membered cycloalkyl which in turn may carry a C₁-C₁₀-alkyl as a substituent, C₆-C₁₅-aryl or arylalkyl, where two neighboring radicals together may furthermore form a cyclic group of 4 to 15 carbon atoms, or Si(R¹³)₃,
R¹³ is C₁-C₁₀-alkyl, C₆-C₁₅-aryl or C₃-C₁₀-cycloalkyl, or
R⁴ and Z together form a group -[Y(R¹⁴)₂]ₙ-E-,
Y is silicon, germanium, tin or carbon,
R¹⁴ is C₁-C₁₀-alkyl, C₃-C₁₀-cycloalkyl or C₆-C₁₅-aryl,
n is 1, 2, 3 or 4,
E is 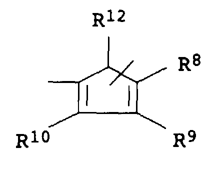 or A,
A is -O-, -S-, 〉NR¹⁵ or 〉PR^{15,}
R¹⁵ is C₁-C₁₀-alkyl, C₆-C₁₅-aryl, C₃-C₁₀-cycloalkyl, alkylaryl or Si(R¹⁶)₃ and
R¹⁶ is C₁-C₁₀-alkyl, C₆-C₁₅-aryl, C₃-C₁₀-cycloalkyl or alkylaryl
is used as component B).

5. A process as claimed in any of claims 1 to 4, wherein an open-chain or cyclic alumoxane compound of the formula II or III 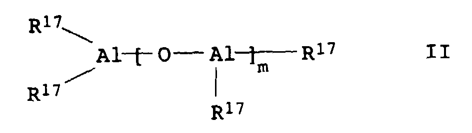 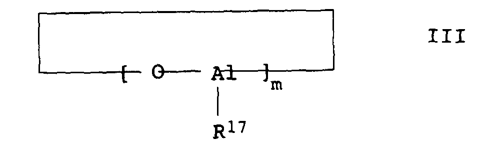 where
R¹⁷ is C₁-C₄-alkyl and m is an integer from 5 to 30,
is used as component C).

6. A process as claimed in any of claims 1 to 5, wherein an alkali metal alkyl or alkaline earth metal alkyl of the formula IV or V
M¹R¹⁸ IV
M²(R¹⁹)₂ V
where
M¹ is lithium, sodium, potassium, rubidium or cesium,
M² is beryllium, magnesium, calcium, strontium, barium or radium and
R¹⁸ and R¹⁹ are each C₁-C₈-alkyl,
or a mixture thereof is used as component D).

7. A homopolymer of ethylene or copolymer of ethylene with other olefins or a mixture thereof, obtainable by a process as claimed in any of claims 1 to 6.

## Revendications

1. Procédé de production d'homopolymères de l'éthylène ou de copolymères de l'éthylène avec d'autres oléfines, ou de leurs mélanges, par polymérisation en suspension en présence de systèmes catalytiques, caractérisé en ce qu'on utilise à titre de systèmes catalytiques des systèmes qui contiennent à titre de constituants actifs :
A) un support à fines particules, traité par du trialkylaluminium,
B) un complexe métallocène,
C) un composé alumoxane à chaîne ouverte ou cyclique
et
D) un alkyle de métal alcalin ou un alkyle de métal alcalino-terreux ou leurs mélanges.

2. Procédé selon la revendication 1, caractérisé en ce qu'on utilise à titre de composant A) des supports avec une granulométrie dans la gamme de 1 à 200 µm.

3. Procédé selon les revendications 1 à 2, caractérisé en ce qu'on utilise à titre de composant A) des gels de silice traités par du triméthylaluminium.

4. Procédé selon les revendications 1 à 3, caractérisé en ce qu'on utilise à titre de composant B) des complexes métallocènes répondant à la Formule générale I: 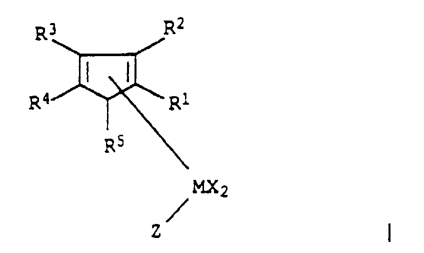 dans laquelle les substituants présentent la signification suivante :
M représente du titane, du zirconium, de l'hafnium, du vanadium, du niobium ou du tantale,
X représente un atome de fluor, un atome de chlore, un atome de brome, un atome d'iode, un atome d'hydrogène, un groupe alkyle en C₁ à C₁₀, un groupe aryle en C₆ à C₁₅ ou un groupe -OR⁶,
où R⁶ représente un groupe alkyle en C₁ à C₁₀, un groupe aryle en C₆ à C₁₅, un groupe alkylaryle, un groupe arylalkyle, un groupe fluoroalkyle ou un groupe fluoroaryle avec respectivement 1 à 10 atomes de carbone dans le résidu alkyle et 6 à 20 atomes de carbone dans le résidu aryle,
R¹ à R⁵ représentent un atome d'hydrogène, un groupe alkyle en C₁ à C₁₀, un groupe cycloalkyle à 5 à 7 membres, qui peut lui-même porter un groupe alkyle en C₁ à C₁₀ à titre de substituant, un groupe aryle en C₆ à C₁₅, ou un groupe arylalkyle, deux résidus adjacents pouvant éventuellement représenter ensemble des groupes cycliques présentant 4 à 15 atomes de carbone, ou un groupe Si(R⁷)₃ avec
R⁷ représentant un groupe alkyle en C₁ à C₁₀, un groupe aryle en C₆ à C₁₅, ou un groupe cycloalkyle en C₃ à C₁₀,
Z représente X ou 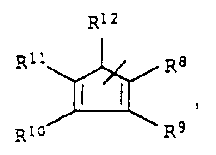
où les résidus R⁸ à R¹² représentent un atome d'hydrogène, un groupe alkyle en C₁ à C₁₀, un groupe cycloalkyle à 5 à 7 membres, qui peut lui-même porter un groupe alkyle en C₁ à C₁₀ à titre de substituant, un groupe aryle en C₆ à C₁₅, ou un groupe arylalkyle, et où deux résidus adjacents peuvent éventuellement représenter ensemble des groupes cycliques présentant 4 à 15 atomes de carbone, ou Si(R¹³)₃ avec
R¹³ représentant un groupe alkyle en C₁ à C₁₀, un groupe aryle en C₆ à C₁₅, ou un groupe cycloalkyle en C₃ à C₁₀,
ou où les résidus R⁴ et Z forment ensemble un groupement -[Y(R¹⁴)₂]ₙ-E-, dans lequel
Y représente du silicium, du germanium, de l'étain ou du carbone,
R¹⁴ représente un groupe alkyle en C₁ à C₁₀, un groupe cycloalkyle en C₃ à C₁₀ ou un groupe aryle en C₆ à C₁₅,
n représente les nombres 1, 2, 3 ou 4,
E représente 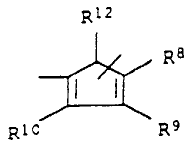 ou A, où A signifie -O-,
-S-, 〉NR¹⁵ ou 〉PR¹⁵,
avec R¹⁵ représentant un groupe alkyle en C₁ à C₁₀, un groupe aryle en C₆ à C₁₅, un groupe cycloalkyle en C₃ à C₁₀, un groupe alkylaryle ou un groupe Si(R¹⁶)₃
avec R¹⁶ représentant un groupe alkyle en C₁ à C₁₀, un groupe aryle en C₆ à C₁₅, un groupe cycloalkyle en C₃ à C₁₀ ou un groupe alkylaryle.

5. Procédé selon les revendications 1 à 4, caractérisé en ce qu'on utilise à titre de composant C) des composés alumoxanes à chaîne ouverte ou cyclique répondant à la Formule générale II ou III 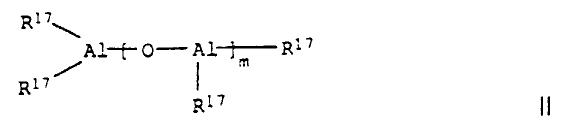 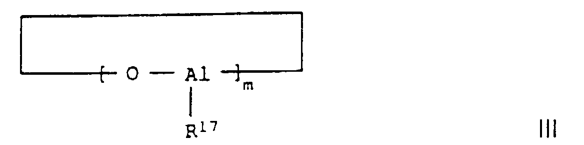 où R¹⁷ représente un groupe alkyle en C₁ à C₄ et m signifie un nombre entier de 5 à 30.

6. Procédé selon les revendications 1 à 5, caractérisé en ce qu'on utilise à titre de composant D) des alkyles de métaux alcalins ou des alkyles de métaux alcalino-terreux répondant aux Formules générales IV ou V
M¹R¹⁸ IV
M²(R¹⁹)₂ V
où
M¹ représente du lithium, du sodium, du potassium, du rubidium ou du césium,
M² représente du béryllium, du magnésium, du calcium, du strontium, du baryum ou du radium
et R¹⁸, R¹⁹ signifient des groupes alkyles en C₁ à C₈
ou leurs mélanges.

7. Homopolymères de l'éthylène ou copolymères de l'éthylène avec d'autres oléfines, ou leurs mélanges, pouvant être obtenus suivant le procédé selon les revendications 1 à 6.
